# FASCICULE DE BREVET EUROPEEN

(11) **EP 0 638 528 B1**
(45) Date de publication et mention de la délivrance du brevet: **02.07.1997**
(21) Numéro de dépôt: 94401846.4
(22) Date de dépôt: 11.08.1994
(51) Int. Cl.: C03C 17/36, C03C 27/12

(54) **Substrats transparents munis d'un empilement de couches minces, application aux vitrages d'isolation thermique et/ou de protection solaire**
Transparente Substrate mit einem Dünnschichtstapel, Verwendung in Verglasungen für thermische Isolation und/oder Sonnenschutz
Transparent substrates with a thin film stack, use in glazing for thermal insulation and/or solar protection

(30) Priorité: 12.08.1993 FR 9309917; 09.03.1994 FR 9402723
(43) Date de publication de la demande: 15.02.1995
(73) Titulaire: SAINT-GOBAIN VITRAGE, 92400 Courbevoie (FR)
(72) Inventeur: Guiselin, Olivier, F-75017 Paris (FR); Brochot, Jean-Pierre, F-75014 Paris (FR); Petit, Pascal, F-93220 Gagny (FR)
(74) Mandataire: Renous Chan, Véronique

(56) Documents cités:
- WO-A-90/02653
- WO-A-90/05439
- FR-A- 2 669 325
- RESEARCH DISCLOSURE, vol.336, Avril 1992, EMSWORTH GB page 262 ANON. 'Improving Stability of Heat Mirror Glazing Composites'

## Description

L'invention concerne les substrats transparents, notamment en verre, qui sont revêtus d'un empilement de couches minces comprenant au moins une couche métallique pouvant agir sur le rayonnement solaire et/ou sur le rayonnement infra-rouge de grande longueur d'onde.

L'invention concerne également l'utilisation de tels substrats pour fabriquer des vitrages d'isolation thermique et/ou de protection solaire. Ces vitrages sont destinés aussi bien à équiper les bâtiments que les véhicules, en vue notamment de diminuer l'effort de climatisation et/ou de réduire une surchauffe excessive entraînée par l'importance toujours croissante des surfaces vitrées dans les habitacles.

Un type d'empilement de couches connu pour conférer aux substrats de telles propriétés est constitué d'au moins une couche métallique, comme une couche d'argent, qui se trouve disposée entre deux couches en matériau diélectrique type oxyde métallique. Cet empilement est généralement obtenu par une succession de dépôts effectués par une technique utilisant le vide comme la pulvérisation cathodique assistée par champ magnétique.

Il est ainsi connu de la demande de brevet WO 90/02653 un vitrage feuilleté destiné à l'automobile et dont le substrat de verre le plus "extérieur" par rapport à l'habitacle du véhicule est muni d'un empilement de cinq couches sur sa face interne en contact avec l'intercalaire en matériau thermoplastique. Cet empilement consiste en deux couches d'argent intercalées avec trois couches d'oxyde de zinc, la couche d'argent la plus proche du substrat extérieur porteur de l'empilement étant d'une épaisseur légèrement supérieure à celle de la seconde couche d'argent.

Les vitrages feuilletés selon cette demande sont utilisés en tant que pare-brise, ce qui explique pourquoi ils présentent des valeurs de transmission lumineuse T_{L} très élevées, de l'ordre de 75 %, afin de respecter les normes de sécurité en vigueur et de ce fait vraisemblablement une valeur de facteur solaire F.S assez élevée également. (On rappelle que le facteur solaire d'un vitrage est le rapport entre l'énergie totale entrant dans le local à travers ce vitrage et l'énergie solaire incidente).

Le but de l'invention est de mettre au point un substrat transparent porteur d'un empilement de couches minces à deux couches réfléchissant les rayonnements dans l'infra-rouge, tout particulièrement métalliques, de manière à ce qu'il présente une haute sélectivité, c'est-à-dire un rapport T_{L}/FS le plus grand possible pour une valeur de T_{L} donnée, tout en garantissant audit substrat un aspect visuel en réflexion esthétiquement satisfaisant.

L'invention a pour objet un vitrage multiple, incorporant un substrat transparent, notamment en verre, à multi-couches minces, sur lequel sont déposés successivement un premier revêtement en matériau diélectrique, une première couche à propriétés de réflexion dans l'infra-rouge notamment à base de métal, un second revêtement en matériau diélectrique, une seconde couche à propriétés dans l'infra-rouge notamment à base de métal, et enfin un troisième revêtement en matériau diélectrique. Selon l'invention, l'épaisseur de la première couche à propriétés de réflexion dans l'infra-rouge, c'est-à-dire celle la plus proche du substrat porteur, correspond à environ 50 à 70 % de l'épaisseur de la seconde couche à propriétés de réflexion dans l'infra-rouge. Un exemple avantageux correspond à une épaisseur de première couche correspondant à environ 65 % de la seconde.

Cette forte dissymétrie dans l'épaisseur des couches à propriétés de réflexion dans l'infra-rouge permet de moduler avantageusement les valeurs de T_{L} et de manière à obtenir des vitrages présentant une bonne sélectivité, c'est-à-dire en fait un bon compromis entre le souci de transparence et celui de protéger au mieux des rayonnements thermiques du soleil.

Par ailleurs, le choix d'une telle dissymétrie entraîne une autre conséquence avantageuse. Non seulement il permet d'obtenir des vitrages dont l'aspect visuel, notamment en réflexion, est agréable, c'est-à-dire présentant une coloration neutre, "lavée de blanc", mais en outre cet aspect visuel se trouve quasiment inchangé quel que soit l'angle d'incidence avec lequel le vitrage est observé. Cela signifie qu'un spectateur extérieur, au vu d'une façade d'un bâtiment entièrement équipée de tels vitrages, n'a pas l'impression visuelle d'une modification de teinte selon l'endroit de la façade où son regard se pose. Ce caractère d'homogénéité d'aspect est très intéressant, car très recherché actuellement des architectes dans le bâtiment.

En outre, l'aspect visuel du vitrage, aussi bien en réflexion qu'en transmission, peut être également affiné et contrôlé par une sélection adéquate des matériaux et des épaisseurs relatives des trois revêtements de matériau diélectrique.

Ainsi, selon une variante non limitative de l'invention, on choisit selon l'invention l'épaisseur optique du premier revêtement approximativement égale à celle du troisième. On choisit alors avantageusement l'épaisseur optique du second revêtement supérieure ou égale à 110% de la somme des épaisseurs optiques des deux autres revêtements, et de préférence correspondant à environ 110-120 % de ladite somme.

Une autre variante concernant les épaisseurs relatives des revêtements de matériau diélectrique, tout aussi avantageuse, consiste à choisir une épaisseur optique du premier revêtement qui soit supérieure à l'épaisseur optique du troisième revêtement. L'épaisseur optique du premier revêtement peut ainsi correspondre à au moins 110 % de l'épaisseur optique du troisième, notamment à au moins 110 à 140 %, notamment 115 à 135 %, et de préférence à environ 125 % de l'épaisseur optique de ce dernier. Dans ce cas de figure, notamment, il est recommandé de sélectionner l'épaisseur optique du second revêtement en matériau diélectrique approximativement égale à la somme des épaisseurs optiques des deux autres.

Dans un cas comme dans l'autre, de telles proportions relatives entre les épaisseurs optiques des revêtements permettent d'obtenir des couleurs en réflexion, et même également en transmission, qui sont appréciées sur le plan esthétique, et notamment le bleu ou le vert.

La seconde variante présente cependant un avantage supplémentaire par rapport à la première, dans la mesure où elle optimise la "non-sensibilité" de l'ensemble de l'empilement aux variations d'épaisseur des différentes couches qui le composent. Cela signifie que de légères variations d'épaisseur de l'une des couches de l'empilement ne se traduisent pas par des défauts d'aspect flagrants d'un vitrage à l'autre ou à la surface d'un même vitrage. C'est un point qui est très important sur le plan industriel, où l'on fabrique des vitrages de grande taille et/ou en grande série avec l'objectif de garder aspects et performances les plus uniformes possibles d'une série de vitrages à l'autre et, surtout, d'une zone à l'autre d'un même vitrage.

En termes de choix de matériau pour cet empilement de couches minces, il est recommandé de surmonter chacune des couches à propriétés de réflexion dans l'infra-rouge, tout particulièrement en métal, d'une fine couche "barrière", et ceci surtout quand les revêtements diélectriques qui les surmontent sont déposés par pulvérisation cathodique réactive en présence d'oxygène. Ces couches barrières protègent ainsi les couches métalliques du contact avec l'oxygène en s'oxydant elles-mêmes partiellement lors du dépôt du revêtement diélectrique supérieur. Elles sont de préférence à base d'alliage au nickel-chrome, de titane, ou de tantale, et d'une épaisseur de 1 à 3 nanomètres.

Concernant les couches à propriétés dans l'infra-rouge, de bons résultats sont obtenus avec des couches d'argent.

Les revêtements en matériau diélectrique sont notamment à base d'oxyde de tantale, d'oxyde de zinc, d'oxyde d'étain, d'oxyde de niobium, d'oxyde de titane ou du mélange de certains de ces oxydes. II se peut également qu'au moins l'un des revêtements soit en fait constitué de deux couches d'oxyde superposées, l'une en oxyde d'étain, l'autre en un oxyde permettant d'améliorer le mouillage des couches à propriétés de réflexion dans l'infra-rouge, comme l'oxyde de tantale ou l'oxyde de niobium conformément à l'enseignement du brevet français FR-A-2 701 475 et à celui du brevet européen EP-A-611 213, ou encore comme l'oxyde de titane.

Chacun des différents oxydes listés ci-dessus présente des avantages. En effet, l'oxyde d'étain et l'oxyde de zinc présentent de grandes vitesses de dépôt lorsqu'ils sont déposés par pulvérisation cathodique réactive, ce qui est industriellement très intéressant. Par contre, l'oxyde de tantale ou l'oxyde de niobium permettent d'obtenir une durabilité accrue de l'empilement face aux aggressions mécaniques ou chimiques et, en outre, favorisent un meilleur mouillage des couches d'argent lorsqu'ils sont sous-jacents à celles-ci. Des oxydes mixtes peuvent offrir un compromis vitesse de dépôt/durabilité et la superposition de deux couches d'oxyde permet de concilier coût des matières premières et meilleure mouillabilité des couches d'argent.

Il est également à noter un avantage supplémentaire lié à l'utilisation de l'oxyde de tantale : un vitrage muni d'un empilement avec un tel matériau diélectrique peut être bleu à la fois en réflexion et en transmission, ce qui est appréciable sur le plan esthétique, et également étonnant puisqu'il est usuel d'obtenir au contraire, en transmission, la couleur complémentaire de celle obtenue en réflexion, quand les couches minces en cause sont peu ou pas absorbantes.

Le mode de réalisation préféré de l'empilement selon l'invention consiste à choisir une épaisseur de 7 à 9 nanomètres pour la première couche de métal, et une épaisseur de 11 à 13 nanomètres pour la seconde. De même, l'on choisit de préférence l'épaisseur optique du premier et du troisième revêtement en matériau diélectrique comprise entre 60 et 90 nanomètres, leur épaisseur géométrique étant notamment comprise entre 30 et 45 nanomètres. L'épaisseur optique du second revêtement est choisie quant à elle comprise entre 140 et 170 nanomètres, son épaisseur géométrique étant notamment comprise entre 70 et 80 nanomètres. On rappelle à ce propos que l'épaisseur optique est définie, de manière connue, par le produit de l'épaisseur géométrique, réelle, de la couche et de l'indice de réfraction du matériau qui la constitue. Selon le type d'oxyde envisagé, l'indice varie notamment entre 1,9 à 2,1 pour l'oxyde d'étain ou de tantale à environ 2,3 pour les oxydes du type oxyde de niobium.

Le substrat revêtu de l'empilement selon l'invention est incorporé dans un vitrage multiple, et notamment en tant que l'un des verres d'un double-vitrage isolant. Dans ce dernier cas, le double-vitrage présente notamment une valeur de transmission lumineuse entre 60 et 70 % et un facteur solaire FS de 0,32 à 0,42, caractéristiques qui le rendent tout à fait approprié pour une utilisation dans le bâtiment. Par ailleurs, il présente de préférence en réflexion un aspect visuel quasiment inchangé quel que soit l'angle d'incidence de vision, les valeurs de a*, b* dans le système de colorimétrie (L, a*, b*, c*) restant inchangées, inférieures à 3 et négatives.

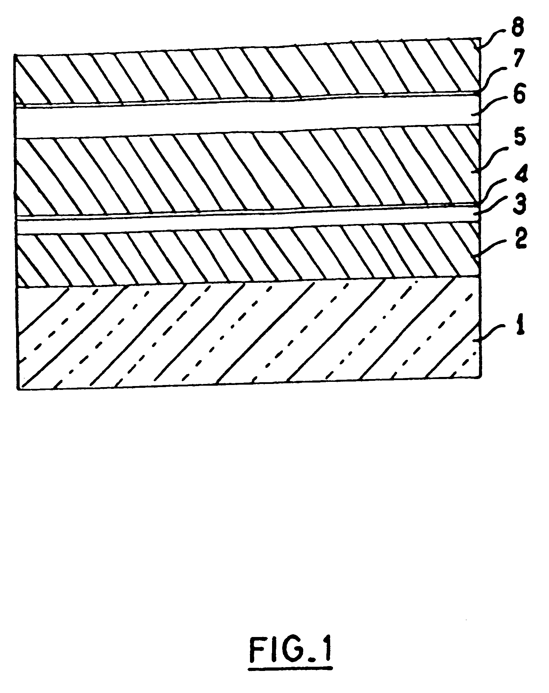

Les détails et caractéristiques avantageuses de l'invention ressortent des exemples suivants non limitatifs, illustrés à l'aide de la figure 1.

On précise dès à présent que, dans tous ces exemples, les dépôts successifs des couches de l'empilement s'effectuent par pulvérisation cathodique assistée par champ magnétique, mais que toute autre technique de dépôt peut être envisagée à partir du moment où elle permet un bon contrôle et une bonne maîtrise des épaisseurs des couches à déposer.

Les substrats sur lesquels sont déposés les empilements sont des substrats de verre silico-sodo-calcique de 4 millimètres d'épaisseur sauf pour les derniers exemples 7 à 10 où les substrats sont de 6 millimètres. En double-vitrages, ils sont assemblés à un autre substrat identique au premier mais nu, par l'intermédiaire d'une lame de gaz de 10 millimètres, sauf pour les derniers exemples 7 à 10 où la lame de gaz fait 12 millimètres.

La figure 1 représente l'empilement selon l'invention et ne respecte pas les proportions quant aux épaisseurs des couches afin que sa lecture en soit facilitée. On y voit le substrat 1 pré-défini, surmonté d'une première couche d'oxyde d'étain ou de tantale 2, d'une première couche d'argent 3, d'une couche barrière en alliage Ni-Cr ou en titane (partiellement oxydés) 4, d'une seconde couche d'oxyde d'étain ou de tantale 5, d'une seconde couche d'argent 6, d'une autre couche barrière 7 identique à la précédente et finalement d'une dernière couche 8 de l'un des mêmes oxydes.

L'installation de dépôt comprend au moins une chambre de pulvérisation munie de cathodes équipées de cibles en matériaux appropriés sous lesquels le substrat 1 passe successivement. Ces conditions de dépôt par chacune des couches sont les suivantes :
* les couches 3, 6 à base d'argent sont déposées à l'aide d'une cible en argent, sous une pression de 0,8 Pa dans une atmosphère d'argon,
* les couches 2, 5, 8 lorsqu'elles sont à base de SnO₂ sont déposées par pulvérisation réactive à l'aide d'une cible d'étain, sous une pression de 0,8 Pa et dans une atmosphère argon/oxygène dont 36 % volumique d'oxygène,
* les couches 2, 5, 8 lorsqu'elles sont à base de Ta₂O₅ ou de Nb₂O₅ sont déposées par pulvérisation réactive à l'aide respectivement d'une cible de tantale ou d'une cible de niobium, sous une pression de 0,8 Pa et dans une atmosphère argon/oxygène dont environ 10 % volumique d'oxygène,
* les couches 4, 7 à base de Ni-Cr (ou de titane) sont déposées à l'aide d'une cible en alliage nickel-chrome (ou de titane), toujours sous la même pression et dans une atmosphère d'argon.

Les densités de puissance et les vitesses de défilement du substrat 1 sont ajustées de manière connue pour obtenir les épaisseurs de couches voulues.

Dans tous les exemples qui suivent, à l'exception du dernier, c'est l'oxyde de tantale qui est choisi comme matériau diélectrique pour les couches 2, 5, 8.

### EXEMPLES 1 A 5

Les exemples 1, 2 et 5 sont les exemples comparatifs, dans la mesure où dans ces trois cas, les couches d'argent 3, 6 sont soit d'épaisseurs quasiment égales (exemple 1) soit d'épaisseurs différentes, mais dont la dissymétrie est inversée par rapport à celle préconisée selon l'invention (exemples 2 et 5).

Les exemples 3 et 4 suivent les enseignements de l'invention.

Le tableau 1 ci-dessous précise pour, chacun des exemples, la nature et les épaisseurs (en nanomètres) des couches de l'empilement en question. Les couches barrières 4, 7 sont notées Ni-Cr, sachant qu'elles sont en fait partiellement oxydées une fois toutes les couches déposées.

**TABLEAU 1**

| | **Ex. 1** | **Ex. 2** | **Ex. 3** | **Ex. 4** | **Ex. 5** |
|---|---|---|---|---|---|
| Verre (1) | - | - | - | - | - |
| Ta₂O₅ (2) | 36.5 | 34.5 | 32 | 32 | 32 |
| Ag (3) | 10 | 11,5 | 8 | 8 | 12 |
| Ni-Cr (4) | 2 | 2 | 2 | 3 | 2 |
| Ta₂O₅ (5) | 77.5 | 94.5 | 77.5 | 72.5 | 77.5 |
| Ag (6) | 11 | 8 | 12 | 12.5 | 8 |
| Ni-Cr (7) | 2 | 2 | 2 | 2 | 2 |
| Ta₂O₅ (8) | 33.5 | 35 | 33.5 | 32 | 33.5 |

Le tableau 2 ci-dessous indique pour chacun des exemples précédents les valeurs de transmission lumineuse T_{L} en pourcentage, de facteur solaire FS calculé selon la norme DIN 67507 (Annexe A 233) en pourcentage, les valeurs de longueur d'onde dominante lambda-dom-t en nanomètres et la pureté de coloration qui y est associée pt, en pourcentage. De même y sont indiquées les valeurs de réflexion lumineuse R_{L} pourcentage, de longueur d'onde dominante en réflexion lambda-dom-r et de pureté en réflexion p.r. en pourcentage, les mesures de colorimétrie ont été effectuées à incidence normale. Toutes ces mesures se rapportent au substrat monté en double-vitrage, en référence à l'illuminant D₆₅.

**TABLEAU 2**

| | **Ex. 1** | **Ex. 2** | **Ex. 3** | **Ex. 4** | **Ex. 5** |
|---|---|---|---|---|---|
| T_{L} | 69 | 66 | 70 | 61 | 62 |
| FS | 42 | 42 | 42 | 38 | 38 |
| Lambda-dom-t | 493 | 489 | 498 | 490 | 478 |
| p.t. | 2 | 5 | 2 | 4 | 6 |
| R_{L} | 12 | 19 | 10 | 10 | 21 |
| Lambda-dom-r | 561 | 641 | 486 | 487 | 574 |
| p.r. | 3 | 9 | 3 | 6 | 35 |

Par ailleurs, ont été rassemblées dans le tableau 3 ci-dessous les valeurs de longueur d'onde dominante en réflexion lambda-dom-r, de pureté en réflexion p.r. pour certains des exemples précédents (les substrats étant toujours montés en double-vitrage), mais cette fois mesurées avec un angle d'incidence par rapport à la normale au plan du substrat de respectivement 60 et 70°.

**TABLEAU 3**

| | **Ex. 1** | **Ex. 2** | **Ex. 3** | **Ex. 5** |
|---|---|---|---|---|
| Lambda-dom-r (60°) | 470 | 569 | 480 | 571 |
| p.r. (60°) | 5.4 | 3 | 4.68 | 8 |
| R_{L} (60°) | 19 | 28 | 20 | 27 |
| Lambda-dom-r (70°) | 462 | 490 | 481 | -498 |
| p.r. (70°) | 4.3 | 4 | 3.0 | 0.8 |
| R_{L} (70°) | 32 | 39 | 34 | 36 |

D'autres mesures de colorimétrie à angles d'incidence 0° et 60° ont été effectuées, cette fois dans le système (L*, a*, b*), ceci pour les exemples 2 et 3 ainsi que pour l'exemple 5 qui est en tout point identique à l'exemple 3 mis à part le fait que les couches d'argent 3 et 6 ont été inversées, et qui se trouve donc en dehors des conditions préconisées par l'invention.

Le tableau 4 ci-dessous regroupe les valeurs de a* et b*, ainsi que c* appelée saturation et égale à la racine carrée de la somme des carrés de a* et b*.

**TABLEAU 4**

| | **Ex. 2** | **Ex. 3** | **Ex. 5** |
|---|---|---|---|
| a* (0°) | 12.2 | - 0.9 | - 2.2 |
| b* (0°) | 3.1 | - 3.1 | 22 |
| c* (0°) | 12.6 | 3.2 | 22.1 |
| a* (60°) | - 1 | - 0.9 | - 1.7 |
| b* (60°) | 2 | - 3 | 6 |
| c* (60°) | 2.2 | 3.13 | 6.2 |

De toutes ces données peuvent être tirées les conclusions suivantes.

A angle d'incidence normal, c'est en conférant des épaisseurs différentes aux deux couches d'argent, et seulement de manière à ce que la couche d'argent la plus proche du substrat soit significativement la plus mince, que l'on peut obtenir des vitrages qui soient bleus en réflexion.

Il est à noter que les vitrages selon l'invention, tout particulièrement quand le diélectrique choisi est de l'oxyde de tantale, sont bleus également en transmission.

Seuls les exemples 3 et 4 présentent en effet des valeurs de lambda-dom-r de l'ordre de 486 nanomètres et de lambda-dom-t de 490 nanomètres, ceci d'après le tableau 2.

Au contraire, les vitrages des exemples 1 et 5,
présentent en réflexion une teinte dans les jaunes tandis que celui de l'exemple 2 est dans les rouges-pourpres.

En outre la pureté de coloration en réflexion p.r. de l'exemple 2, proche de 10 % est nettement supérieure à celle des exemples 3 et 4 selon l'invention. (Cette valeur de p.r est encore bien plus élevée pour l'exemple 5).

Par ailleurs, les vitrages des exemples 3 et 4 selon l'invention présentent une bonne sélectivité d'au moins 1,6 ou 1,7 avec un facteur solaire qui reste inférieur ou égal à 42 %.

Donc l'obtention d'une colorimétrie favorable selon l'invention ne s'obtient pas au détriment des performances de protection anti-solaire des vitrages en question.

Les tableaux 3 et 4 permettent d'évaluer le caractère d'homogénéité de l'aspect en réflexion des vitrages selon certains des exemples précédents. Du tableau 3, on constate que le vitrage selon l'exemple 3 conforme à l'invention conserve une couleur bleue en réflexion, avec une valeur de lambda-dom-r qui reste quasiment constante vers 486 à 0° à 481 à 70°, la pureté en réflexion restant également très modérée.

Au contraire, le vitrage selon l'exemple 1, où les couches d'argent ont approximativement la même épaisseur, passe d'une couleur en réflexion jaune à incidence normale à une couleur bleue puis violette à 60 puis 70°.

Du tableau 4, on peut confirmer que seul l'exemple 3 selon l'invention permet de garder un aspect coloré en réflexion identique quel que soit l'angle d'incidence, puisque les valeurs de a* et b* restent quasiment inchangées, de même que la saturation c*.

Ce n'est pas le cas des vitrages des exemples 2 et 5, où les valeurs de a* et b* changent totalement selon l'angle d'incidence. Ainsi, la valeur de a* passe, pour le vitrage de l'exemple 2, d'une valeur positive très élevée de 12,2 à 0°, à une valeur négative et très faible de -1 à 60°.

Seuls les exemples selon l'invention concilient donc sélectivité et homogénéité d'aspect.

### EXEMPLES 6 ET 7

Ces deux exemples utilisent cette fois comme matériau diélectrique non plus de l'oxyde de tantale mais de l'oxyde d'étain et en utilisant pour faire les couches barrières soit du titane (exemple 6), soit du Ni-Cr (exemple 7).

Le tableau 5 ci-dessous indique les valeurs d'épaisseur (en nanomètres) mises en jeu pour chacune des couches de l'empilement :

**TABLEAU 5**

| | **Ex. 6** | **Ex. 7** |
|---|---|---|
| Verre (1) | - | - |
| SnO₂ (2) | 34 | 32 |
| Ag (3) | 8 | 8 |
| Ti ou Ni-Cr (4) | 1 | 1.5 |
| SnO₂ (5) | 77 | 74.5 |
| Ag (6) | 12 | 11.6 |
| Ti ou Ni-Cr (7) | 1 | 1.5 |
| SnO₂ (8) | 35 | 33 |

Les substrats ainsi revêtus ont été montés en double-vitrages comme expliqué plus haut. Les mesures photométriques sur les double-vitrages ont été rassemblées dans le tableau 6 ci-dessous : (mesures à incidence normale)

**TABLEAU 6**

| | **Ex. 6** | **Ex. 7** |
|---|---|---|
| T_{L} | 66 | 65 |
| FS | 38 | 39 |
| R_{L} | 10.4 | 9.4 |
| Lambda-dom-r | 511 | 484 |
| p.r. | 2 | 2 |
| a* | - | - 0.5 |
| b* | - | - 1.1 |

Ces vitrages, comme ceux des exemples 3 et 4, ne présentent pas de modification significative de leur aspect visuel en réflexion quel que soit l'angle de mesure. Ils présentent en réflexion une couleur se situant plutôt dans les verts pour l'exemple 6 et plutôt dans les bleus pour l'exemple 7, couleurs qui restent cependant très neutres, vu les très faibles valeurs de pureté qui y sont associées.

Les vitrages feuilletés qui incorporent les substrats recouverts de l'empilement selon l'invention conservent la colorimétrie favorable observée dans le cas des substrats monolithiques ou montés en double-vitrages.

Ainsi, le substrat recouvert de l'empilement selon l'exemple 3 précédent a été assemblé à un autre substrat du même type mais dépourvu de couche à l'aide d'un film standard de polyvinylbutyral de 0,3 millimètre d'épaisseur.

Le tableau 7 ci-dessous regroupe pour ce vitrage feuilleté les valeurs déjà explicitées de T_{L} p.t, lambda.dom.t, a* et b* concernant l'aspect en transmission, ainsi que les valeurs correspondantes R_{L}, p.r, lambda-dom-r, a* et b* concernant l'aspect en réflexion du côté du substrat muni de l'empilement de couches : (mêmes unités que précédemment).

**TABLEAU 7**

| | |
|---|---|
| T_{L} | 70 |
| p.t. | 1.2 |
| lambda-dom-t | 502 |
| a* | - 3.27 |
| b* | 0.52 |
| R_{L} | 14 |
| p.r. | 8 |
| lambda-dom-r | 483 |
| a* | - 2.2 |
| b* | - 4.4 |

De ce tableau 7, on peut constater qu'incorporer les substrats recouverts selon l'invention dans une structure de vitrage feuilleté n'altère pas leur colorimétrie esthétique : le vitrage feuilleté ainsi obtenu reste dans les bleus ou verts aussi bien en transmission qu'en réflexion.

Les exemples précédents 3, 4 et 6 conformes à l'invention se rapportent à la "première variante" de l'invention évoquée plus haut, c'est-à-dire respectent un choix d'épaisseurs relatives entre les trois couches d'oxyde 2, 5 et 8 bien spécifique et approximativement le suivant : l'épaisseur de la couche 2 est approximativement égale à celle de la couche 8, et l'épaisseur de la couche 5 "du milieu" est un peu supérieure à la somme des épaisseurs des deux autres 2 et 8 (dans ces exemples, on peut parler indifféremment d'épaisseur géométrique ou d'épaisseur optique, puisque les trois couches sont constituées d'un même oxyde).

La "seconde variante" selon l'invention va maintenant être illustrée à l'aide des exemples suivants, et tout particulièrement à l'aide de l'exemple 8. Dans cette variante, les rapports d'épaisseur entre les couches d'oxyde 2, 5 et 8 sont un peu modifiés, l'épaisseur optique de la couche 2 étant sensiblement (de 25 % notamment) supérieure à celle de la couche 8. L'épaisseur optique de la couche 5 (ou la somme des épaisseurs optiques des différentes sous-couches qui la composent) est ici plutôt approximativement égale à la somme des épaisseurs optiques des deux autres couches 2 et 8.

### EXEMPLE 8

Le substrat selon cet exemple 8 est recouvert d'un empilement proche de celui décrit pour l'exemple 7 : les couches 2, 5 et 8 sont également en oxyde d'étain, mais d'épaisseurs différentes.

Le tableau 8 ci-dessous indique les valeurs d'épaisseurs (en nanomètres) de toutes les couches de l'empilement en question.

**TABLEAU 8**

| | **Ex. 8** |
|---|---|
| Verre (1) | - |
| SnO₂ (2) | 41 |
| Ag (3) | 8 |
| Ni-Cr (4) | 1.5 |
| SnO₂ (5) | 74.5 |
| Ag (6) | 12 |
| Ni-Cr (7) | 1.5 |
| SnO₂ (8) | 33 |

Le substrat est monté en double-vitrage. Les mesures photométriques réalisées sur le double-vitrage ont été rassemblées dans le tableau 9 ci-dessous (mesure à incidence normale) :

**TABLEAU 9**

| | **Ex. 8** |
|---|---|
| T_{L} | 65 |
| FS | 39 |
| R_{L} | 9.1 |
| lambda-dom-r | 486 |
| p.r. | 1 |
| a* | - 0.7 |
| b* | - 0.5 |

En comparant ces résultats à ceux obtenus notamment avec l'exemple 7, on constate que l'on obtient des valeurs de T_{L} et F.S identiques. Concernant l'aspect en réflexion, il se situe également dans les bleus, avec une couleur encore plus neutre, puisque la pureté est d'environ 1 % et que les valeurs de a* et b* sont toutes les deux nettement inférieures à 1. Un autre avantage du type d'empilement selon l'exemple 7 est qu'il autorise plus facilement de légères variations d'épaisseur des couches de l'empilement, d'un point à l'autre du substrat, sans induire de modifications perceptibles de son aspect visuel.

Ainsi, si l'on fait des mesures de a* et b* en réflexion en différents points du substrat selon l'exemple 8 monté en double-vitrage, on constate que les différences de valeur restent globalement inférieures à 1, c'est-à-dire des différences non perceptibles par l'oeil humain, même si les couches présentent des variations d'épaisseurs locales de +/- 4 % chacune. C'est très important sur le plan industriel, car cela permet d'obtenir plus aisément des vitrages à la fois homogènes, c'est-à-dire ne présentant pas de modifications d'aspect locales, et reproductibles, c'est-à-dire d'aspect identique d'un vitrage à l'autre ou d'une série de vitrages à une autre. Cela signifie que, pour une ligne de fabrication donnée, qui a sa propre limite en terme de performances, et notamment en termes de régularités de couches obtenues, un tel empilement se révèlera moins "sensible" que d'autres aux variations d'épaisseur de couches qu'impose la ligne, et sera donc, globalement, de meilleure qualité optique.

A l'inverse, si l'on impose une qualité optique donnée, on peut, avec ce type d'empilement, utiliser une ligne de fabrication dans des conditions moins draconniennes ou utiliser une ligne un peu moins performante.

On peut par ailleurs noter qu'il est également avantageux sur le plan industriel que la couche 5 soit d'une épaisseur à peu près égale à la somme des épaisseurs des couches 2 et 8. En effet, il suffit alors d'utiliser deux cibles, ici d'étain, dont on peut régler les puissances délivrées "une fois pour toutes" dans leurs chambres de dépôt respectives : La couche 2 est alors obtenue par passage du substrat sous l'une des cibles avec des réglages permettant le dépôt d'une épaisseur adéquate pré-définie. De même, la couche 8 est obtenue par passage du substrat sous la seconde cible avec des réglages permettant d'obtenir le dépôt d'une épaisseur adéquate là encore pré-définie. Quant à la couche 5, elle est obtenue par passages consécutifs du substrat sous chacune des cibles, de manière à ce que sur le substrat se superposent une épaisseur de couche correspondant à celle de la couche 2 (ou 8) puis une épaisseur de couche correspondant à celle de la couche 8 (ou 2), soit en fait la somme des épaisseurs de ces deux couches, sans faire appel à une troisième cible.

### EXEMPLES 9 A 12

Ces exemples ont pour but d'optimiser la mouillabilité, et donc les performances, d'au moins une des couches d'argent. lls suivent l'enseignement du brevet européenne EP-A-611 213 précité :
- Dans le cas des exemples 9 et 10, les couches 2 et 8 sont comme précédemment en oxyde d'étain, mais la couche 5 est subdivisée en deux couches superposées, la première 5 en oxyde d'étain, la seconde notée 5 bis en oxyde de tantale (pour l'exemple 9) ou en oxyde de niobium (pour l'exemple 10). Une mince sous-couche métallique peut être prévue optionnellement sous la couche d'argent 6, en NiCr ou en Sn.
- Dans le cas des exemples 11 et 12, la couche 2 est en outre, elle aussi, subdivisée en deux couches superposées, la première 2 en oxyde d'étain, la seconde notée 2 bis en oxyde de tantale (pour l'exemple 11) ou en oxyde de niobium (pour l'exemple 12). Une mince sous-couche métallique optionnelle peut être également prévue sous le couche d'argent 3.

Donc, dans le cas des exemples 9 et 10, on optimise la mouillabilité de la seconde couche d'argent 6, tandis que dans le cas des exemples 11 et 12, la mouillabilité des deux couches d'argent 3, 6 se trouve optimisée.

Le tableau 10 ci-dessous rappelle les épaisseurs, toujours en nanomètres, des couches en présence :

**TABLEAU 10**

| | **Ex. 9 et 10** | **Ex. 11 et 12** |
|---|---|---|
| verre (1) | - | - |
| SnO₂ (2) | 41 | 30 - 31 |
| Ta₂O₅ ou Nb₂O₅ (2 bis) | 0 | 10 |
| Ag (3) | 8 | 8 |
| Ni-Cr (4) | 1.5 | 1.5 |
| SnO₂ (5) | 64 | 64 |
| Ta₂O₅ ou Nb₂O₅ (5 bis) | 10 | 10 |
| Ag (6) | 12 | 12 |
| Ni-Cr (7) | 1.5 | 1.5 |
| SnO₂ (8) | 33 | 33 |

On a constaté une légère amélioration des performances anti-solaires de l'ensemble des empilements. En outre, utiliser des oxydes connus pour leur dureté, comme l'oxyde de tantale ou de niobium, contribue à optimiser la durabilité de l'empilement global, tout particulièrement sa durabilité mécanique. Cette augmentation de la résistance mécanique est notamment particulièrement prononcée pour les exemples 11 et 12.

En conclusion, les vitrages selon l'invention présentent à la fois une bonne sélectivité de l'ordre de 1,70, un aspect visuel homogène et agréable à l'oeil (notamment une couleur bleue ou verte en réflexion, et éventuellement également en transmission), ainsi qu'une palette de valeurs de transmission lumineuse qui les rend très aptes à être utilisés en tant que vitrages de protection solaire dans le bâtiment, notamment sous forme de double-vitrages, l'empilement de couches minces se trouvant de préférence en face 2. (les faces sont conventionnellement numérotées à partir de l'extérieur vers l'intérieur de l'habitacle ou du local en question).

## Revendications

1. Vitrage multiple, incorporant un substrat transparent (1), notamment en verre, à multi-couches minces sur lequel sont déposés successivement:
* un premier revêtement en matériau diélectrique (2),
* une première couche (3) à propriétés de réflexion dans l'infra-rouge, notamment à base de métal,
* un second revêtement en matériau diélectrique (5),
* une seconde couche (6) à propriétés de réflexion dans l'infra-rouge, notamment à base de métal,
* un troisième revêtement en matériau diélectrique (8), **caractérisé en ce que** l'épaisseur de la première couche à propriétés de réflexion dans l'infra-rouge (3), c'est-à-dire celle la plus proche du substrat porteur, correspond à 50 à 70 %, et notamment 65 % de celle de la seconde couche à propriétés de réflexion dans l'infra-rouge (6), de manière à ce que l'aspect optique dudit vitrage en réflexion extérieure reste identique, quel que soit l'angle d'incidence, les valeurs de a* et b* dans le système de colorimétrie (L, a*, b*, c*) restant inchangées, inférieures à 3 et de signe négatif.

2. Vitrage selon la revendication 1, **caractérisé en ce que** l'épaisseur optique du second revêtement en matériau diélectrique (5) est supérieure ou égale à 110 % de la somme des épaisseurs optiques des deux autres revêtements (2, 8) en matériau diélectrique, et de préférence correspond à 110-120% de ladite somme.

3. Vitrage selon la revendication 2, **caractérisé en ce que** les épaisseurs optiques du premier revêtement en matériau diélectrique (2) et du troisième revêtement en matériau diélectrique (8) sont égales.

4. Vitrage selon la revendication 1, **caractérisé en ce que** l'épaisseur optique du premier revêtement en matériau diélectrique (2) est supérieure à l'épaisseur optique du troisième revêtement en matériau diélectrique (8), l'épaisseur optique du premier revêtement (2) correspondant notamment à au moins 110 %, notamment au moins 110 à 140 % et de préférence à 125 % de l'épaisseur optique du troisième revêtement (8).

5. Vitrage selon la revendication 4, **caractérisé en ce que** l'épaisseur optique du second revêtement en matériau diélectrique (5) est égale à la somme des épaisseurs optiques des premier et troisième revêtements diélectriques (2, 8).

6. Vitrage selon l'une des revendications précédentes, **caractérisé en ce que** chacune des couches à propriétés de réflexion dans l'infra-rouge (3, 6) est surmontée d'une fine couche métallique (4, 7) "barrière" partiellement oxydée, notamment à base d'un alliage nickel-chrome ou de titane, et de préférence d'une épaisseur de 1 à 3 nanomètres.

7. Vitrage selon l'une des revendications précédentes, **caractérisé en ce que** les couches (3, 6) à propriétés de réflexion dans l'infra-rouge sont à base d'argent.

8. Vitrage selon l'une des revendications précédentes, **caractérisé en ce qu**'au moins un des trois revêtements en matériau diélectrique (2, 5, 8) est à base d'oxyde de tantale, d'oxyde d'étain, d'oxyde de zinc, d'oxyde de niobium, d'oxyde de titane ou de mélange desdits oxydes, ou encore est constitué d'une première couche d'oxyde d'étain surmontée d'une seconde couche d'oxyde de tantale, d'oxyde de niobium ou d'oxyde de titane.

9. Vitrage selon l'une des revendications précédentes, **caractérisé en ce que** l'épaisseur de la première couche à propriétés de réflexion dans l'infra-rouge (3) est comprise entre 7 et 9 nanomètres.

10. Vitrage selon l'une des revendications précédentes, **caractérisé en ce que** l'épaisseur de la seconde couche à propriétés de réflexion dans l'infra-rouge (6) est comprise entre 11 et 13 nanomètres.

11. Vitrage selon l'une des revendications précédentes, **caractérisé en ce que** l'épaisseur optique des premier (2) et troisième (8) revêtement en matériau diélectrique est comprise entre 60 et 90 nanomètres **et en ce que** l'épaisseur optique du second revêtement en matériau diélectrique (5) est comprise entre 140 et 170 nanomètres.

12. Vitrage multiple, notamment double-vitrage, selon l'une des revendications 1 à 11, **caractérisé en ce qu**'il présente une transmission lumineuse (T_{L}) comprise entre 60 et 70 % et un facteur solaire (FS) de 0,32 à 0,42.

13. Vitrage multiple, notamment double-vitrage, selon l'une des revendications 1 à 11, **caractérisé en ce qu'**il présente une couleur en réflexion extérieure dans les bleus, et éventuellement également en transmission notamment quand les revêtements (2, 5, 8) sont en oxyde de tantale.

## Claims

1. Multiple glazing pane, incorporating a transparent substrate (1), notably of glass, having thin multiple films on which are deposited, in succession:
. a first coating of dielectric material (2),
. a first film (3) having reflective properties in the infrared, notably based upon metal,
. a second coating of dielectric material (5),
. a second film (6) having reflective properties in the infrared, notably based upon metal,
. a third coating of dielectric material (8), characterized in that the thickness of the first film having reflective properties in the infrared (3), that is to say that which is nearest the supporting substrate, corresponds to from 50 to 70%, and notably 65%, of that of the second film having reflective properties in the infrared (6), in such a way that the visual appearance of said glazing pane in external reflection remains identical, whatever the angle of incidence, the values of a* and b* in the colorimetric system (L, a*, b*, c*) remaining unchanged, less than 3 and of negative sign.

2. Glazing pane according to claim 1, characterized in that the optical thickness of the second coating of dielectric material (5) is greater than or equal to 110% of the sum of the optical thicknesses of the other two coatings (2, 8) of dielectric material, and preferably corresponds to 110-120% of said sum.

3. Glazing pane according to claim 2, characterized in that the optical thicknesses of the first coating of dielectric material (2) and of the third coating of dielectric material (8) are equal.

4. Glazing pane according to claim 1, characterized in that the optical thickness of the first coating of dielectric material (2) is greater than the optical thickness of the third coating of dielectric material (8), the optical thickness of the first coating (2) corresponding, notably, to at least 110%, notably at least 110 to 140% and preferably to 125%, of the optical thickness of the third coating (8).

5. Glazing pane according to claim 4, characterized in that the optical thickness of the second coating of dielectric material (5) is equal to the sum of the optical thicknesses of the first and third dielectric coatings (2, 8).

6. Glazing pane according to one of the preceding claims, characterized in that each of the films having reflective properties in the infrared (3, 6) is overlain by a partly oxidized "barrier" fine metallic film (4, 7), notably based upon a nickel-chrome alloy or titanium, and preferably having a thickness of 1 to 3 nanometres.

7. Glazing pane according to one of the preceding claims, characterized in that the films (3, 6) having reflective properties in the infrared are based upon silver.

8. Glazing pane according to one of the preceding claims, characterized in that at least one of the three coatings of dielectric material (2, 5, 8) is based upon tantalum oxide, tin oxide, zinc oxide, niobium oxide, titanium oxide or a mixture of said oxides, or again is constituted of a first film of tin oxide overlain by a second film of tantalum oxide, niobium oxide or titanium oxide.

9. Glazing pane according to one of the preceding claims, characterized in that the thickness of the first film having reflective properties in the infrared (3) lies between 7 and 9 nanometres.

10. Glazing pane according to one of the preceding claims, characterized in that the thickness of the second film having reflective properties in the infrared (6) lies between 11 and 13 nanometres.

11. Glazing pane according to one of the preceding claims, characterized in that the optical thickness of the first (2) and third (8) coatings of dielectric material lies between 60 and 90 nanometres and in that the optical thickness of the second coating of dielectric material (5) lies between 140 and 170 nanometres.

12. Multiple glazing pane, notably double glazing pane, according to one of claims 1 to 11, characterized in that it has a light transmission (T_{L}) of from 60 to 70% and a solar factor (FS) of 0.32 to 0.42.

13. Multiple glazing pane, notably double glazing pane, according to one of claims 1 to 11, characterized in that it has a colour in external reflection in the blues and possibly also in transmission, notably when the coatings (2, 5, 8) are of tantalum oxide.

## Patentansprüche

1. Mehrfachverglasung, die ein insbesondere aus Glas bestehendes transparentes Substrat (1) mit mehreren dünnen Schichten enthalt, auf welchem übereinander
- eine erste Beschichtung (2) aus dielektrischem Material,
- eine erste Schicht (3), speziell auf der Grundlage eines Metalls, mit Reflexionsvermögen im Infrarot,
- eine zweite Beschichtung (5) aus dielektrischem Material,
- eine zweite Schicht (6), speziell auf der Grundlage eines Metalls, mit Reflexionsvermögen im Infrarot und
- eine dritte Beschichtung (8) aus dielektrischem Material
aufgebracht sind, **dadurch gekennzeichnet, daß** die Dicke der ersten Schicht (3) mit Reflexionsvermögen im Infrarot, d.h. der dem Trägersubstrat am nächsten liegenden Schicht, 50 bis 70 % und insbesondere 65 % derjenigen der zweiten Schicht (6) mit Reflexionsvermögen im Infrarot derart entspricht, daß das optische Erscheinungsbild der Verglasung unter von außen auffallendem reflektiertem Licht unabhängig vom Einfallswinkel gleich bleibt und auch die Werte von a* und b* im Farbmeßsystem (L, a*, b*, c*) von unter 3 mit negativem Vorzeichen unverändert bleiben.

2. Verglasung nach Anspruch 1, **dadurch gekennzeichnet, daß** die optische Dicke der zweiten Beschichtung (5) aus dielektrischem Material größer oder gleich 110 % der Summe der optischen Dicken der beiden anderen Beschichtungen (2, 8) aus dielektrischem Material ist und vorzugsweise 110 bis 120 % dieser Summe entspricht.

3. Verglasung nach Anspruch 2, **dadurch gekennzeichnet, daß** die optische Dicke der ersten Beschichtung (2) aus dielektrischem Material und der dritten Beschichtung (8) aus dielektrischem Material gleich ist.

4. Verglasung nach Anspruch 1, **dadurch gekennzeichnet, daß** die optische Dicke der ersten Beschichtung (2) aus dielektrischem Material größer als die der dritten Beschichtung (8) aus dielektrischem Material ist, wobei die optische Dicke der ersten Beschichtung (2) insbesondere mindestens 110 %, speziell mindestens 110 bis 140 % und vorzugsweise 125 % der optischen Dicke der dritten Beschichtung (8) entspricht.

5. Verglasung nach Anspruch 4, **dadurch gekennzeichnet, daß** die optische Dicke der zweiten Beschichtung (5) aus dielektrischem Material gleich der Summe der optischen Dicken der ersten und dritten dielektrischen Beschichtung (2, 8) ist.

6. Verglasung nach einem der vorhergehenden Ansprüche, **dadurch gekennzeichnet, daß** jede der Schichten (3, 6) mit Reflexionsvermögen im Infrarot mit einer feinen metallischen Sperrschicht (4, 7) überzogen ist, die teilweise oxidiert ist und insbesondere eine chromnickellegierung oder Titan zur Grundlage und vorzugsweise eine Dicke von 1 bis 3 Nanometern besitzt.

7. Verglasung nach einem der vorhergehenden Ansprüche, **dadurch gekennzeichnet, daß** die Schichten (3, 6) mit Reflexionsvermögen im Infrarot Silber zur Grundlage haben.

8. Verglasung nach einem der vorhergehenden Ansprüche, **dadurch gekennzeichnet, daß** wenigstens eine der drei Beschichtungen (2, 5, 8) aus dielektrischem Material Tantaloxid, Zinnoxid, Zinkoxid, Nioboxid, Titanoxid oder ein Gemisch aus diesen Oxiden zur Grundlage hat oder auch aus einer ersten Zinnoxidschicht besteht, die mit einer zweiten Schicht aus Tantaloxid, Nioboxid oder Titanoxid überzogen ist.

9. Verglasung nach einem der vorhergehenden Ansprüche, **dadurch gekennzeichnet, daß** die Dicke der ersten Schicht (3) mit Reflexionsvermögen im Infrarot 7 bis 9 Nanometer beträgt.

10. Verglasung nach einem der vorhergehenden Ansprüche, **dadurch gekennzeichnet, daß** die Dicke der zweiten Schicht (6) mit Reflexionsvermögen im Infrarot 11 bis 13 Nanometer beträgt.

11. Verglasung nach einem der vorhergehenden Ansprüche, **dadurch gekennzeichnet, daß** die optische Dicke der ersten (2) und der dritten (8) Beschichtung aus dielektrischem Material 60 bis 90 Nanometer und daß die optische Dicke der Zweiten Beschichtung (5) aus dielektrischem Material 140 bis 170 Nanometer beträgt.

12. Mehrfach- und insbesondere Doppelverglasung nach einem der Ansprüche 1 bis 11, **dadurch gekennzeichnet, daß** sie einen Gesamtenergiedurchlaßgrad (T_{L}) von 60 bis 70 % und einen Sonneneinstrahlungskoeffizienten (FS) von 0,32 bis 0,42 aufweist.

13. Mehrfach- und insbesondere Doppelverglasung nach einem der Ansprüche 1 bis 11, **dadurch gekennzeichnet, daß** sie unter von außen auffallendem reflektiertem und gegebenenfalls auch bei durchgelassenem Licht eine Färbung im blauen Bereich aufweist, insbesondere wenn die Beschichtungen (2, 5, 8) aus Tantaloxid bestehen.
